# EUROPEAN PATENT SPECIFICATION

(11) **EP 4 060 203 B1**
(45) Date of publication and mention of the grant of the patent: **04.06.2025**
(21) Application number: 21000075.8
(22) Date of filing: 16.03.2021
(51) Int. Cl.: F16H 1/08, B62M 6/55

(54) **AN ELECTRIC DRIVE FOR A BYCICLE**
ELEKTRISCHER ANTRIEB FÜR EIN FAHRRAD
ENTRAÎNEMENT ÉLECTRIQUE DE BICYCLETTE

(43) Date of publication of application: 21.09.2022
(73) Proprietor: MAHLE International GmbH, 70376 Stuttgart (DE)
(72) Inventor: Wirth, Christian, DE - 85742 Moosinning (DE); Koop, Matthias, DE - 85375 Neufahrn (DE)

(56) References cited:
- EP-A1- 0 755 854
- EP-A1- 3 480 104
- EP-A1- 3 680 161
- WO-A1-2015/080687
- CN-U- 206 871 295
- DE-U1- 202011 100 442
- JP-A- H10 338 184
- US-A- 1 902 683
- US-A1- 2018 045 286

## Description

### TECHNICAL FIELD

The invention relates to an electric drive for a bicycle, according to the preamble of independent claim 1 and to a bicycle according to the dependent claim 9.

### BACKGROUND ART

A known prior art electric drive for a bicycle is disclosed in US10843770B2. The electric drive includes an electric motor having a drive shaft. The electric drive includes a transmission, which drivingly connects the drive shaft to a driven shaft for driving the wheel of a bicycle. The rotational axes of the drive shaft, the transmission gears and the driven shaft are all parallel. WO 2015/080687 discloses an electric drive for a bicycle in accordance with the preamble of claim 1.

### SUMMARY

The electric drive for a bicycle, according to the invention as defined in claim 1 has the advantage over the prior art electric drives in that vibrations and hence noise emissions are reduced.

This object is achieved according to a first aspect of the invention with an electric drive comprising, an electric motor having a drive shaft, a driven shaft for coupling to a wheel drive of the bicycle, a transmission comprising a plurality of gears which drivingly connects in a rotational drive direction the drive shaft to the driven shaft, wherein the plurality of gears comprises a first gear and a second gear which engage with each other, whereby the rotational axes of the first gear and second gear are non-parallel and non-intersecting, whereby the angle between rotational axes of the first gear and second gear, when viewed along an axis perpendicular to the rotational axes of the first gear and second gear, is in the range of 10°to 20°.

The feature that the rotational axes of the first gear and second gear are non-parallel and non-intersecting introduces an additional sliding component in the gear mesh resulting in additional friction losses. Manufacturers of electric drives for bicycles strive for increasing efficiency, and the skilled man usually aims to avoid additional friction losses in order to increase efficiency. The inventors of the present invention have however recognized that the additional friction losses cause a damping behavior that lowers the gear excitation and reduces noise emissions from the electric drive. At the same time the arrangement of the rotational axes of the first gear and second gear that are non-parallel and non-intersecting allows a higher gear ratio for the same distance between the rotational centres of the first and second gear. Therefore, compared to gears with parallel axes, the loss of efficiency can be compensated by increasing the gear ratio or, for the same gear ratio, decreasing the size of the electric drive unit.

In a preferred embodiment of the invention, the angle between rotational axes of the first gear and second gear, when viewed along an axis perpendicular to the rotational axes of the first gear and second gear, is preferably in the range of 13° to 17°. The inventors have found that an angle of 15° between rotational axes of the first gear and second gear sufficiently reduces the gear excitation and enables a larger gear ratio between the first and second gears for the same distance between the rotational axes of the two gears.

In one embodiment of the invention the first gear and the second gear are helical gears. Alternatively the first gear can be a worm gear.

In one advantageous embodiment the first gear is connected in a rotationally fixed manner to the drive shaft of the motor. At this point the mesh frequency of the electric drive is the highest and is therefore more critical regarding noise.

In order to achieve a high gear reduction in a compact unit, the transmission preferably comprises a planetary transmission which, on the input side, has a sun gear which is connected in a rotationally fixed manner to the second gear. The planetary transmission can comprise a planetary carrier with planetary gears drivingly connected to a ring gear, whereby the planetary carrier is connected in a rotationally fixed manner to a gear which is drivingly connected to a transmission output gear. Additionally the ring gear can also be drivingly connected to the transmission output gear. The term "drivingly connected" can mean either driving directly, or driving via one or more additional gears.

In a further advantageous embodiment at least one of the plurality of gears is made from a plastic material. The use of a plastic material improves the damping in the transmission, further reducing excitation and noise emissions.

In a particularly advantageous embodiment torque is transmitted from the drive shaft through the transmission and via a freewheel to the driven shaft in the rotational drive direction and the freewheel allows for a relative rotation of the driven shaft in relation to a transmission output gear in a rotational drive direction.

In another advantageous embodiment, instead of connecting to a sun gear, the second gear is connected in a rotationally fixed manner to a pinion gear which is drivingly connected to the driven shaft.

According to a further advantageous embodiment of the electric drive, the rotational axis of the motor drive shaft is substantially parallel with the rotational axis of the driven shaft. This facilitates the manufacturing of the casing for the electric drive, as the cylindrical part of the casing which positions the stator of the motor can be machined along the same axis as the parts the casing which receive other parts of the transmission. In order to achieve this, the rotational axis of the second gear and the rotational axis of the driven shaft are non-parallel and non-intersecting. The second gear can therefore be accommodated in an electric drive casing at an angle to the other transmission components. This arrangement is also more compact than if the motor were to be arranged at an angle to the other components.

In a second aspect of the invention a bicycle is provided comprising a pedal shaft and a wheel drive for driving a driven wheel of the bicycle and an electric drive, the electric drive comprising, an electric motor having a drive shaft, a driven shaft for coupling to a wheel drive of the bicycle, a transmission comprising a plurality of gears which drivingly connects in a rotational drive direction the drive shaft to the driven shaft, wherein the plurality of gears comprises a first gear and a second gear which engage with each other, whereby the rotational axes of the first gear and second gear are non-parallel and non-intersecting.

In an advantageous embodiment torque is transmitted from a pedal shaft via a freewheel to the driven shaft in the rotational drive direction and the freewheel allows for a relative rotation between the driven shaft and the pedal shaft in a counter rotational direction opposite to the rotational drive direction.

### BRIEF DESCRIPTION OF THE DRAWINGS

Embodiments will now be described by way of example only with reference to the accompanying drawings, in which:
Figure 1 is a schematic drawing of an electric drive according to the invention,
Figure 2 is a side view of an electric drive according to the invention,
Figure 3 is a side view, orthogonal to the view in figure 2, of an electric drive according to the invention.

### DETAILED DESCRIPTION

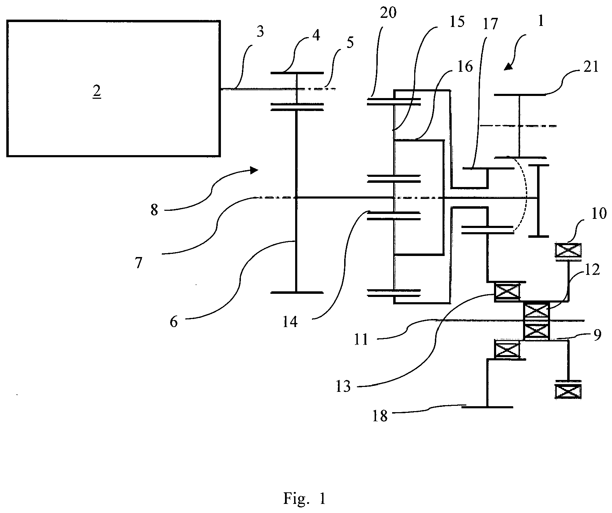

Fig. 1 is a schematic drawing of an electric drive 1 according to the invention. The electric drive 1 comprises a motor 2, for example a brushless DC motor with an output drive shaft 3. The drive shaft 3 is connected in a rotationally fixed manner to a first gear 4. In the embodiments shown in the drawings, the first gear 4 is a helical gear. The first gear 4 rotates around a first rotational axis 5 and is drivingly connected via a transmission 8 to a driven shaft 9. The driven shaft 9 is drivingly connected to a wheel drive 10 of a bicycle, in particular a chain or belt or shaft drive. The driven shaft 9 is also connected via a freewheel device 12 to a pedal shaft 11 to allow relative movement of the driven shaft 9 and the pedal shaft 11 in an opposite rotational direction to the driven direction. The cyclist can therefore apply torque via a pedal crank 19 and the pedal shaft 11 to the wheel drive 10 in one direction but if the cyclist stops pedaling no torque is transferred to the pedal shaft 11 due to the freewheel 12. A second freewheel device 13 is arranged between the driven shaft 9 and the transmission 8, so that the transmission 8 can apply torque in a drive direction to the wheel drive 10, while the freewheel 13 allows a relative movement of the driven shaft 9 in relation to the transmission 8 in a drive direction. Freewheel 13 therefore allows to pedal the bicycle with a stopped motor 2. Turning the wheel drive 10, which can be a spider 10, in reverse direction will also turn the motor 2 in the opposite direction.

The first gear 4, which is a pinion gear, intermeshes with a second gear 6 which rotates around a second rotational axis 7. The first gear 4 therefore drives the second gear 6. The second gear 6 has a larger diameter with more teeth than the first gear 4, so that the rotation speed of the second gear 6 is reduced compared to the motor drive shaft 3. The second gear 6 is connected in a rotationally fixed manner to a sun gear 14 of a first planetary gear stage of the transmission 8. The sun gear 14 intermeshes with at least one planetary gear 15 which is rotatably supported on a planetary holder 16. The at least one planetary gear 15 intermeshes with a ring gear 20 which is connected in a rotatably fixed manner to a gear 17. The gear 17 intermeshes with a transmission output gear 18 having a larger diameter than the gear 17, and the transmission output gear 18 is connected via the freewheel 13 to the driven shaft 9. The output of the planetary holder 16 can also be drivingly connected to the transmission output gear 18 via an intermediate gear 21. The embodiment in fig. 1 shows a transmission 8 with a single planetary stage, however a transmission with two or more planetary stages could also be used, whereby the gear 17 or the output of the planetary holder 16 can act as an input sun gear for a further planetary stage. In another embodiment, which is not shown, instead of connecting to a sun gear 14, the second gear 6 is connected in a rotationally fixed manner to a pinion gear which is drivingly connected to the transmission output gear 18

The transmission 8 therefore acts as a speed reducer to convert the high speed and relative low torque of the drive shaft 3 to a lower speed and higher torque output at gear 18 in order to apply a suitable torque to the wheel drive 10. The high speed of the drive shaft 3 means that the mesh frequency at the first gear 4 is high which would typically lead to high noise emissions.

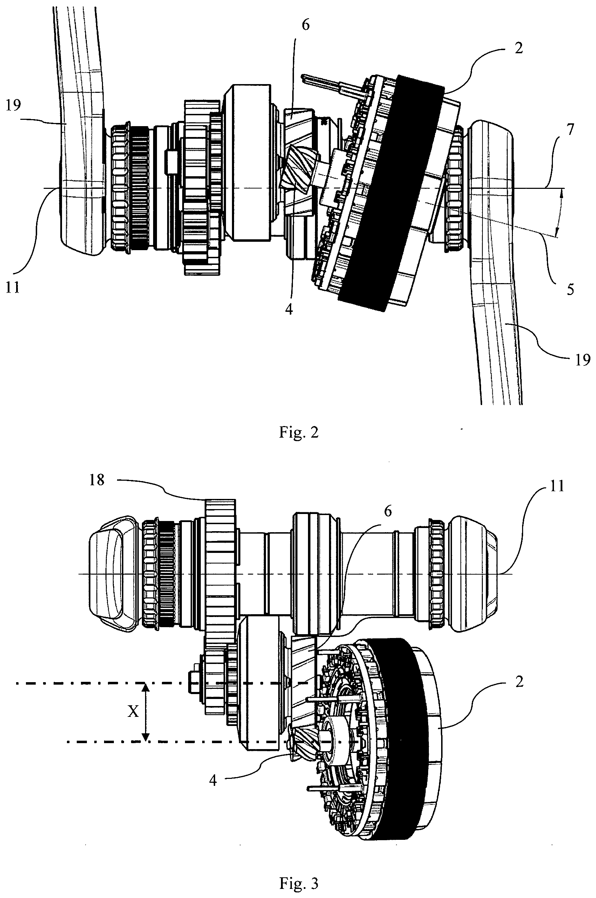

Now referring to figure 2 which shows a view of the electric drive 1 according to one embodiment of the invention in a first direction along an axis perpendicular to the rotational axis 5 of the first gear 4 and the rotational axis 7 of the second gear 6. The inventors have recognized that by arranging the axes 5 and 7 so they are non-parallel and non-intersecting, an additional sliding component is introduced in the gear mesh of the first gear 4 and the second gear 6 resulting in additional friction losses. The additional friction losses cause a damping behavior that lowers the gear excitation and reduces noise emissions from the electric drive 1. At the same time the arrangement of the rotational axes 5, 7 of the first gear and second gear that are non-parallel and non-intersecting allows a higher gear ratio for the same distance between the rotation centres of the first and second gear. Therefore, compared to gears with parallel axes, the loss of efficiency can be compensated by increasing the gear ratio or, for the same gear ratio, by decreasing the size of the electric drive unit 1. The inventors have found that an angle α of 15 degrees between rotational axes 5 and 7, when viewed along an axis perpendicular to the rotational axes 5 and 7 of the first gear 4 and second gear 6, sufficiently reduces the gear excitation and enables a larger gear ratio between the first and second gears for the same distance X between the rotational axes 5 and 7 when viewed in a second direction, as shown in figures 1 and 3, the second direction being perpendicular to the first direction. The efficiency loss from the additional sliding component in the gear mesh can therefore be compensated by the higher gear ratio, enabling an improved gear reduction, or for the same gear reduction, the electric drive 1 can be made more compact and hence lighter, which is advantageous when used in a bicycle drive.

### LIST OF REFERENCE NUMERALS

1. Electric drive
2. Motor
3. Drive shaft
4. First gear
5. First rotational axis
6. Second gear
7. Second rotation axis
8. Transmission
9. Driven shaft
10. Wheel drive
11. Pedal shaft
12. Freewheel device
13. Second freewheel device
14. Sun gear
15. Planetary gear
16. Planetary holder
17. Gear
18. Output gear
19. Pedal crank
20. Ring gear
21. Intermediate gear

## Claims

1. An electric drive (1) for a bicycle, comprising,
- an electric motor (2) having a drive shaft (3),
- a driven shaft (9) for coupling to a wheel drive (10) of the bicycle,
- a transmission comprising a plurality of gears which drivingly connects, in a rotational drive direction, the drive shaft (3) to the driven shaft (9),
- wherein the plurality of gears comprises a first gear (4) and a second gear (6) which engage with each other,
- whereby the rotational axes of the first gear (4) and second gear (6) are non-parallel and non-intersecting.
- **characterized in that**, when viewed along an axis perpendicular to the rotational axes (5,7) of the first gear (4) and the second gear (6), the angle between rotational axes (5, 7) of the first gear (4) and the second gear (6) is in the range of 10 deg to 20 deg.

2. An electric drive (1) for a bicycle according to claim 1, whereby when viewed along an axis perpendicular to the rotational axes (5,7) of the first gear (4) and the second gear (6), the angle between rotational axes (5, 7) of the first gear (4) and the second gear (6) is in the range of 13 deg to 17 deg.

3. An electric drive (1) according to one of the preceding claims, whereby the first gear (4) and the second gear (6) are helical gears.

4. An electric drive (1) according to one of the preceding claims, whereby the first gear (4) is connected in a rotationally fixed manner to the drive shaft (3).

5. An electric drive (1) according to one of the preceding claims, whereby the transmission (8) comprises a planetary transmission which on the input side has a sun gear (14) which is connected in a rotationally fixed manner to the second gear (6).

6. An electric drive (1) according to according to one of the preceding claims, whereby at least one of the plurality of gears is made from a plastic material.

7. An electric drive (1) according to one of the preceding claims, whereby torque is transmitted from the drive shaft (3) through the transmission (8) and via a freewheel (13) to the driven shaft (9) in the rotational drive direction and the freewheel (13) allows for a relative rotation of the driven shaft (9) in relation to a transmission output gear (18) in a rotational drive direction.

8. An electric drive (1) according to one of the preceding claims, whereby the rotational axis (5) of the motor drive shaft (3) is substantially parallel with the rotational axis of the driven shaft (9).

9. A bicycle comprising a pedal shaft (11) and a wheel drive (10) for driving a driven wheel of the bicycle and an electric drive (1) according to one of the preceding claims.

10. A bicycle according to claim 9 whereby torque is transmitted from a pedal shaft (11) via a freewheel (12) to the driven shaft (9) in the rotational drive direction and the freewheel (12) allows for a relative rotation between the driven shaft (9) and the pedal shaft (11) in a counter rotational direction opposite to the rotational drive direction.

## Patentansprüche

1. Elektrischer Antrieb (1) für ein Fahrrad, umfassend,
- einen Elektromotor (2), der eine Antriebswelle (3) aufweist,
- eine angetriebene Welle (9) zum Koppeln mit einem Radantrieb (10) des Fahrrads,
- ein Getriebe, umfassend eine Vielzahl von Zahnrädern, die die Antriebswelle (3) in einer Drehantriebsrichtung mit der angetriebenen Welle (9) antriebsmäßig verbindet,
- wobei die Vielzahl von Zahnrädern ein erstes Zahnrad (4) und ein zweites Zahnrad (6) umfasst, die miteinander in Eingriff stehen,
- wobei die Drehachsen des ersten Zahnrads (4) und des zweiten Zahnrads (6) nicht parallel sind und sich nicht schneiden.
- **dadurch gekennzeichnet, dass,** wenn entlang einer Achse senkrecht zu den Drehachsen (5,7) des ersten Zahnrads (4) und des zweiten Zahnrads (6) betrachtet, der Winkel zwischen den Drehachsen (5, 7) des ersten Zahnrads (4) und des zweiten Zahnrads (6) in dem Bereich von 10 Grad bis 20 Grad liegt.

2. Elektrischer Antrieb (1) für ein Fahrrad nach Anspruch 1, wobei, wenn entlang einer Achse senkrecht zu den Drehachsen (5,7) des ersten Zahnrads (4) und des zweiten Zahnrads (6) betrachtet, der Winkel zwischen den Drehachsen (5, 7) des ersten Zahnrads (4) und des zweiten Zahnrads (6) in dem Bereich von 13 Grad bis 17 Grad liegt.

3. Elektrischer Antrieb (1) nach einem der vorstehenden Ansprüche, wobei das erste Zahnrad (4) und das zweite Zahnrad (6) Schrägzahnräder sind.

4. Elektrischer Antrieb (1) nach einem der vorstehenden Ansprüche, wobei das erste Zahnrad (4) auf drehfeste Weise mit der Antriebswelle (3) verbunden ist.

5. Elektrischer Antrieb (1) nach einem der vorstehenden Ansprüche, wobei das Getriebe (8) ein Planetengetriebe umfasst, das auf der Eingangsseite ein Sonnenrad (14) aufweist, das auf drehfeste Weise mit dem zweiten Zahnrad (6) verbunden ist.

6. Elektrischer Antrieb (1) nach einem der vorstehenden Ansprüche, wobei mindestens eines der Vielzahl von Zahnrädern aus einem Kunststoffmaterial hergestellt ist.

7. Elektrischer Antrieb (1) nach einem der vorstehenden Ansprüche, wobei ein Drehmoment von der Antriebswelle (3) durch das Getriebe (8) und über einen Freilauf (13) auf die angetriebene Welle (9) in der Drehantriebsrichtung übertragen wird und der Freilauf (13) eine Relativdrehung der angetriebenen Welle (9) in Relation zu einem Getriebeausgangszahnrad (18) in einer Drehantriebsrichtung zulässt.

8. Elektrischer Antrieb (1) nach einem der vorstehenden Ansprüche, wobei die Drehachse (5) der Motorantriebswelle (3) im Wesentlichen parallel zu der Drehachse der angetriebenen Welle (9) ist.

9. Fahrrad, umfassend eine Pedalwelle (11) und einen Radantrieb (10) zum Antreiben eines angetriebenen Rads des Fahrrads und einen elektrischen Antrieb (1) nach einem der vorstehenden Ansprüche.

10. Fahrrad nach Anspruch 9, wobei das Drehmoment von einer Pedalwelle (11) über einen Freilauf (12) in der Drehantriebsrichtung auf die angetriebene Welle (9) übertragen wird und der Freilauf (12) eine Relativdrehung zwischen der angetriebenen Welle (9) und der Pedalwelle (11) in einer der Drehantriebsrichtung entgegengesetzten Drehrichtung zulässt.

## Revendications

1. Entraînement électrique (1) pour une bicyclette, comprenant,
- un moteur électrique (2) ayant un arbre d'entraînement (3),
- un arbre entraîné (9) destinée à s'accoupler à un entraînement de roue (10) de la bicyclette,
- une boîte de vitesses comprenant une pluralité d'engrenages qui relie par entraînement, dans une direction d'entraînement rotatif, l'arbre d'entraînement (3) à l'arbre entraîné (9),
- dans lequel la pluralité d'engrenages comprend un premier engrenage (4) et un second engrenage (6) qui viennent en prise l'un avec l'autre,
- dans lequel les axes de rotation du premier engrenage (4) et du second engrenage (6) ne sont pas parallèles et ne se croisent pas,
- **caractérisé en ce que,** vu le long d'un axe perpendiculaire aux axes de rotation (5, 7) du premier engrenage (4) et du second engrenage (6), l'angle entre des axes de rotation (5, 7) du premier engrenage (4) et du second engrenage (6) est compris dans la plage allant de 10 degrés à 20 degrés.

2. Entraînement électrique (1) pour une bicyclette selon la revendication 1, dans lequel, vu le long d'un axe perpendiculaire aux axes de rotation (5, 7) du premier engrenage (4) et du second engrenage (6), l'angle entre des axes de rotation (5, 7) du premier engrenage (4) et du second engrenage (6) est compris dans la plage allant de 13 degrés à 17 degrés.

3. Entraînement électrique (1) selon l'une des revendications précédentes, dans lequel le premier engrenage (4) et le second engrenage (6) sont des engrenages hélicoïdaux.

4. Entraînement électrique (1) selon l'une des revendications précédentes, dans lequel le premier engrenage (4) est relié de manière solidaire en rotation à l'arbre d'entraînement (3).

5. Entraînement électrique (1) selon l'une des revendications précédentes, dans lequel la boîte de vitesses (8) comprend une boîte de vitesses à engrenages planétaires qui, du côté entrée, a un planétaire (14) qui est relié de manière solidaire en rotation au second engrenage (6).

6. Entraînement électrique (1) selon l'une des revendications précédentes, dans lequel au moins l'un parmi la pluralité d'engrenages est fabriqué en matière plastique.

7. Entraînement électrique (1) selon l'une des revendications précédentes, dans lequel un couple est transmis à partir de l'arbre d'entraînement (3) à l'arbre entraîné (9) par le biais de la boîte de vitesses (8) et par l'intermédiaire d'une roue libre (13) dans la direction d'entraînement rotatif, et la roue libre (13) permet une rotation relative de l'arbre entraîné (9) par rapport à un engrenage de sortie de boîte de vitesses (18) dans une direction d'entraînement rotatif.

8. Entraînement électrique (1) selon l'une des revendications précédentes, dans lequel l'axe de rotation (5) de l'arbre d'entraînement (3) du moteur est sensiblement parallèle à l'axe de rotation de l'arbre entraîné (9).

9. Bicyclette comprenant un arbre de pédalier (11) et un entraînement de roue (10) destiné à entraîner une roue entraînée de la bicyclette et un entraînement électrique (1) selon l'une des revendications précédentes.

10. Bicyclette selon la revendication 9, dans laquelle un couple est transmis à partir d'un arbre de pédalier (11) par l'intermédiaire d'une roue libre (12) à l'arbre entraîné (9) dans la direction d'entraînement rotatif et la roue libre (12) permet une rotation relative entre l'arbre entraîné (9) et l'arbre de pédalier (11) dans une direction de rotation inverse opposée à la direction d'entraînement rotatif.
